# EUROPEAN PATENT APPLICATION

(11) **EP 1 187 497 A2**
(43) Date of publication of application: **13.03.2002**
(21) Application number: 01120951.7
(22) Date of filing: 31.08.2001
(51) Int. Cl.: H04Q 3/00

(54) **Service creation and service logic execution environment for a network processor**

(30) Priority: 11.09.2000 US 659228
(71) Applicant: Alcatel USA Sourcing, L.P., Plano, Texas 75075-5813 (US)
(72) Inventor: Gilman R., Stevens, Fairview, Texas 75069 (US)
(74) Representative: Dreiss, Fuhlendorf, Steimle & Becker

(57) **Abstract**

An edge-optimized network element disposed in a telecommunications network, the network element including one or more network processors having a service creation and service logic execution environment (SCE/SLEE) for wirespeed service switching and routing. A programming interface is provided for effectuating the network processor's SCE/SLEE, whereby appropriate service logic programs (SLPs) are generated or updated in association with a centralized service control point (SCP) and SCE disposed in the telecommunications network. The programming interface is operable with a packaging tool for packaging one or more programmable service independent blocks (SIBs) to create SLPs which effectuate multiple services such as, e.g., 800/900-number services, QoS prioritization schemes, etc., on a dynamically-configurable basis. A call control module is provided in association with the network processor for executing suitable call process models for subscriber calls received at the edge-optimized network element. Based on detection points and service triggers associated with a particular call process, a corresponding SLP is launched in association with the SLEE for appropriate call routing in the telecommunications network.

## Description

### BACKGROUND OF THE INVENTION

### Technical Field of the Invention

The present invention relates to telecommunications networks and services and, more particularly, to a system and method for providing a carrier-grade service creation and service logic execution environment (SCE/SLEE) for a network processor arrangement forming an optimized edge node or network access point of a network or a combination of networks.

### Description of Related Art

In today's networked world, bandwidth is a critical source. Increasing network traffic, driven by the Internet and emerging bandwidth-intensive applications, is straining the capacity of communications lines and semiconductor technologies.employed in telecommunications. To keep pace, organizations are looking for better technologies and methodologies to support and manage traffic growth and the convergence of voice with data.

Network processors (NPs), a new class of application-specific integrated circuits (ASICs), offer a solution that can help maximize bandwidth utilization and traffic flow. As NP technology evolves, network equipment vendors are turning from fixed-function ASIC designs to more capable and flexible "processor-model" NP products which are being developed for broadband network routers and other edge devices. Typically, these processors place a few lower levels/layers of a communication protocol on a single ASIC chipset having a programmable area for performing algorithms for packet per port optimizations (e.g., perflow call queuing).

These advanced broadband algorithms are operable as high-speed (i.e., wirespeed) packet forwarding engines which are downloaded into the ASICs for specialized optimized routing, forwarding, and queue management. It should be appreciated that these packet algorithms are similar in nature to switch telephony port optimization technologies used in Class 4 and Class 5 switches in terms of the end goal, i.e., port optimization through balanced distribution of resources.

With the advent of better ASICs, more understanding of network routing requirements, virtual private network (VPN) tunneling technologies, and increasing embedded memory densities, additional algorithmic capabilities are currently being explored. For instance, typical capabilities offered by the state-of-the-art NP technologies include security, high-speed store and forward, switch fabric, efficient load balancing, etc., and target ISO layer 2 and higher.

Despite these advances, several lacunae in the existing NP solutions should be apparent. First, the current NP functionality does not include call processing capability which involves launching call control state models responsive to calls received at a serving edge node. In addition, whereas today's NPs can execute algorithms that are similar in essence to the algorithms of Class 4/5 switches and the service algorithms employed in service control points (SCPs) (which can be analogized as centralized, low speed forwarding engines), they are not capable of modifying call routing directly in a network-service oriented manner. Consequently, advanced feature routing functionality necessary for providing carrier-grade service switching at the network access point is lacking.

### SUMMARY OF THE INVENTION

Accordingly, the present invention advantageously provides an edge-optimized network element disposed in a telecommunications network, the network element including one or more network processors having a carrier-grade service creation and service logic execution environment (SCE/SLEE) capability for wirespeed service switching and routing at the access point. A programming interface is provided for effectuating the network processor's SCE/SLEE, whereby appropriate service logic programs (SLPs) are generated or updated in association with a centralized service control point (SCP) and SCE disposed in the telecommunications network. The programming interface is operable with a packaging tool for packaging one or more programmable service independent blocks (SIBs) to create SLPs which effectuate multiple services on a dynamically-configurable basis. For example, 800/888/900-number services, QoS prioritization schemes, Domain Name Server (DNS) and Lightweight Directory Access Protocol (LDAP) services, virtual private network (VPN) tunneling, heuristic modeling based on the network's behavior, et cetera, can be effectuated by interacting with the network processor's programming interface to code appropriate SLPs. In addition, a call and connection control module is provided in association with the network processor for executing suitable call process models for subscriber calls received at the edge-optimized network element. Based on detection points and service triggers associated with a particular call process, a corresponding SLP or SLPs are launched in association with the SLEE for appropriate call routing in the telecommunications network.

In one aspect, the present invention is directed to a network element disposed in a telecommunications network and operable to serve a subscriber, wherein the network element includes a network processor having a programmable interface for dynamically configuring a routing operation at wirespeed in response to a request received from the subscriber. An SLP is provided to be executable in association with the network processor, wherein the SLP is launched based on a service trigger associated with the subscriber.

In another aspect, the present invention is directed to a network processor operable for use in an edge-optimized node disposed in a telecommunications network. The network processor preferably includes a high-speed packet engine for operating on incoming packets and to determine appropriate routing in the telecommunications network with respect to the incoming packets. A service logic execution (SLE) module is operably coupled to the packet engine for interacting with, and for modifying if necessary, the routing operation with respect to a subscriber call received at the serving node. A call and connection control module is operably coupled to the packet engine and SLE module, whereby the call/connection control module is operable to launch the SLE module based on detection points and triggering events encountered in a call process model associated with the subscriber's call. A local database (populated with the subscriber's service profile in local memory) is queried for appropriate service data. A programming interface is included for dynamically programming carrier-grade, telecom-hardened SLPs that are executable in the SLE in response to the call/connection control module to achieve wirespeed service switching capability at the edge node.

In yet another aspect, the present invention is directed to a method of call routing in a telecommunications network having an edge node with a programmable network processor. Upon receiving a call in the edge node for a subscriber served by the edge node, a call process model is launched in association with the programmable network processor. One or more appropriate SLPs are executed on the programmable network processor, which SLPs are operable to be invoked responsive to the call process model. A routing number or destination number is determined based on the executed SLPs. Thereafter, the call is routed at wirespeed in the telecommunications network based on the routing number.

### BRIEF DESCRIPTION OF THE DRAWINGS

A more complete understanding of the present invention may be had by reference to the following Detailed Description when taken in conjunction with the accompanying drawings wherein:
FIG. 1 depicts an exemplary telecommunications network wherein an edge node or network access point (e.g., a switch/router network element) is provided with one or more network processors optimized for wirespeed switching and routing in accordance with the teachings of the present invention;
FIG. 2 depicts an exemplary network processor arrangement for an optimized edge node of the present invention;
FIG. 3 depicts an exemplary software architecture of a network processor arrangement provided in accordance with the teachings of the present invention;
FIG. 4 depicts an exemplary hardware architecture of a network processor provided in accordance with the teachings of the present invention
FIG. 5 depicts a functional block diagram of a programmable network processor optimized for call connection control and service creation/execution in accordance with the teachings of the present invention;
FIG. 6 depicts an exemplary functional hierarchy of an optimized edge node of the present invention;
FIG. 7 depicts an exemplary communications network system wherein optimized edge nodes are provided as SS7 entities;
FIG. 8 depicts a functional block diagram of an exemplary service creation environment provided for a programmable network processor in accordance with the teachings of the present invention; and
FIG. 9 is a flow chart of an exemplary call routing method provided in accordance with the teachings of the present invention.

### DETAILED DESCRIPTION OF THE DRAWINGS

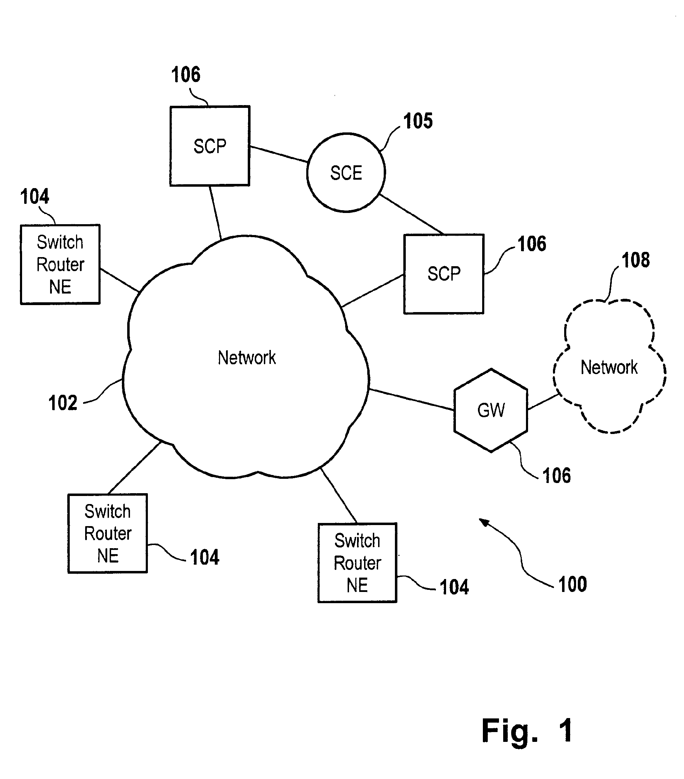

In the drawings, like or similar elements are designated with identical reference numerals throughout the several views thereof, and the various elements depicted are not necessarily drawn to scale. Referring now to FIG. 1, depicted therein is an exemplary telecommunications network arrangement 100 wherein one or more edge nodes, e.g., a switch/router network element (NE) 104, are provided with one or more programmable network processors optimized for wirespeed switching and routing in accordance with the teachings of the present invention. The edge node elements 104 are operably coupled to a network core 102 which may be provided as a circuit-switched network (CSN), packet-switched network (PSN), or a hybrid network in any combination, capable of carrying voice, data, multimedia, etc. in wireless or wireline embodiments using any known or hitherto unknown physical media technologies. A plurality of service nodes 106 operable in accordance with a suitable signaling/service architecture, e.g.; Advanced Intelligent Network (AIN) using Signaling System No. 7, are provided in the exemplary telecommunications network arrangement 100. Preferably, service nodes 106 comprise service network elements such as SCPs for executing service programs that define centralized services available in the network and further store and maintain databases having service data. Service nodes 106 may preferably be associated with a centralized SCE 105 that is responsible for specifying, developing, integrating/testing, deploying and provisioning centralized services in the network.

The exemplary network arrangement 100 is also comprised of one or more gateways, e.g, gateway (GW) 106 operable as a media GW, signaling GW, mobility GW, or any combination thereof, for providing an interworking mechanism between the network core 102 and another network 108 operable with different signaling, media, et cetera.

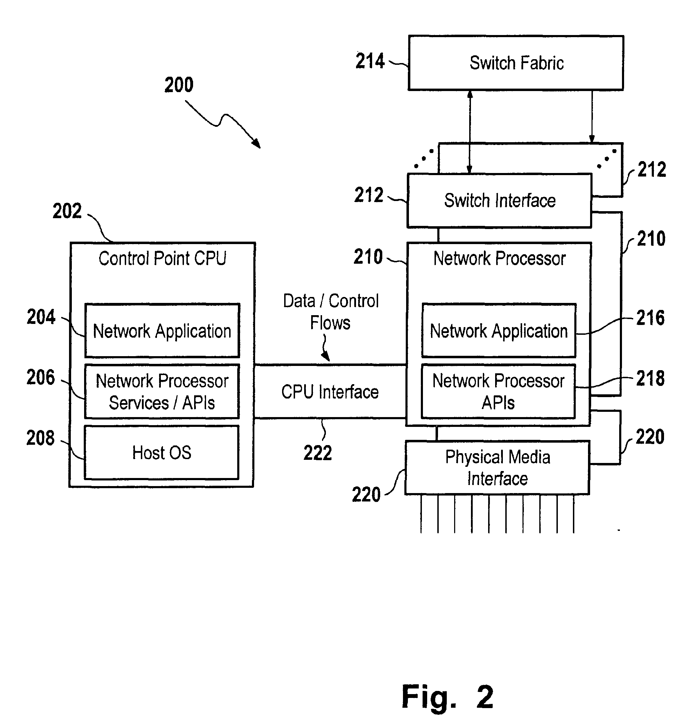

FIG. 2 depicts an exemplary network processor arrangement 200 provided in accordance with the teachings of the present invention for an optimized edge node such as, e.g., switch/router NE 104 described above. One or more network processors are arranged to provide switching and routing capabilities with respect to calls (comprising voice, data, multimedia, or any combination thereof) received at the edge node comprising the network processor arrangement 200. One of the processors may be provided as a "control point" for coordinating the remaining processors of the network processor arrangement 200. For example, network processors 210 having a switch interface 212 are inter-coupled together by means of a connection switch fabric 214, and are connected to a control point processor 202 via a processor interface 222. The processor interface 222 is operable to carry data and control flows between the control point processor 202 and the network processors 212 with respect to one or more network applications running on the control point processor 202 (e.g., network application 204) and on the network processor or processors (e.g., network application 216). In order to effectuate appropriate network applications, each of the processors is provided with suitable network application programming interfaces (APIs) (e.g., reference numerals 206 and 218). A host operating system (OS) 208 running on the control point processor 202 interfaces with the network processor services/APIs 206 which are, in turn, interfaced with the APIs 218 provided for the network processors 212.

Each network processor 210 is also provided with a physical media interface 220 for connecting to one or more telecommunications networks (e.g., network 102 shown in FIG. 1). Furthermore, as will be described in greater detail hereinbelow, the network processor APIs 218 are provided with the capability to interact with a carrier-grade service creation and service logic execution environment for enhancing the performance of the edge router node.

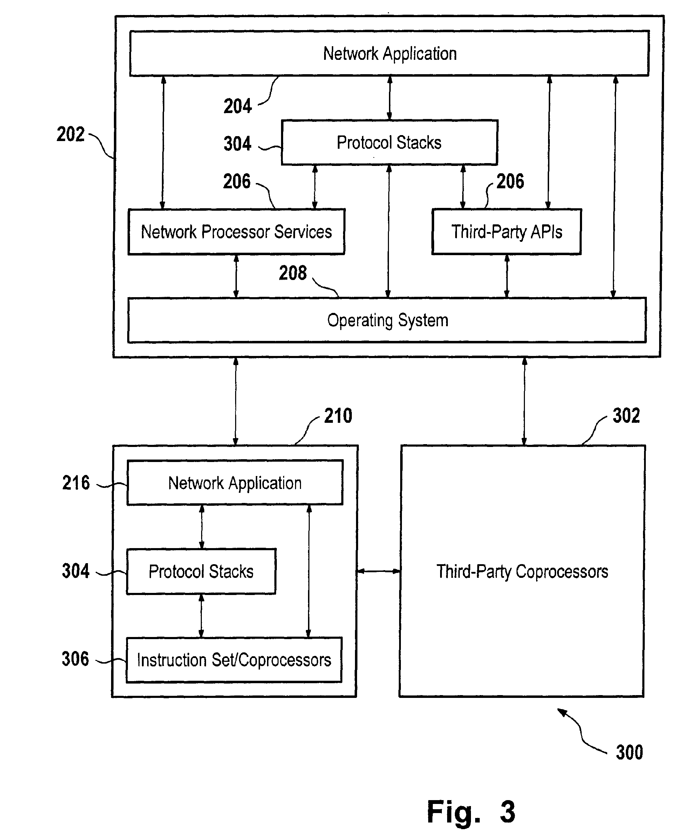

Referring now to FIG. 3, shown therein is an exemplary software architecture 300 operable with a network processor arrangement provided in accordance with the teachings of the present invention. The software architecture 300 may preferably provided as a partitioned architecture suitable for a multi-processor environment such as the network processor arrangement 200 described above. Network applications 204 running on the control point processor 202 interact with network processor services and APIs 206 via appropriate protocol stacks 304, e.g., SS7, IP, Multi-Protocol Label Switching (MPLS), equal-cost multipath (ECMP), etc. The host OS 208 interacts with the network applications 204 via the protocol stacks 304, processor services/APIs 206, or directly.

The software architecture for each network processor 210 is comprised of network application modules 216 whose functionality is defined by the protocol stacks 304 supported (SS7, IP, MPLS, ECMP, etc.) and the instruction set/coprocessors 306 used for the network processor chipset. One or more third-party coprocessors 302 may be provided for defining additional functionality (encryption, compression, etc.), which coprocessors are preferably operable to interact with the network processors 210 as well as the control point processor 202.

It should be appreciated that unique value-added networking applications may be provided as applications 204 and 216 residing on top of a given protocol stack in the network processors. The software architecture is provided to be flexible whereby the existence of different components and modules and how they interact together may vary depending upon specific implementation. Accordingly, by employing service APIs for creating and executing service programs in accordance with the teachings of the present invention, service solution providers can add value by providing wirespeed switching and routing capabilities at a network access point for certain services.

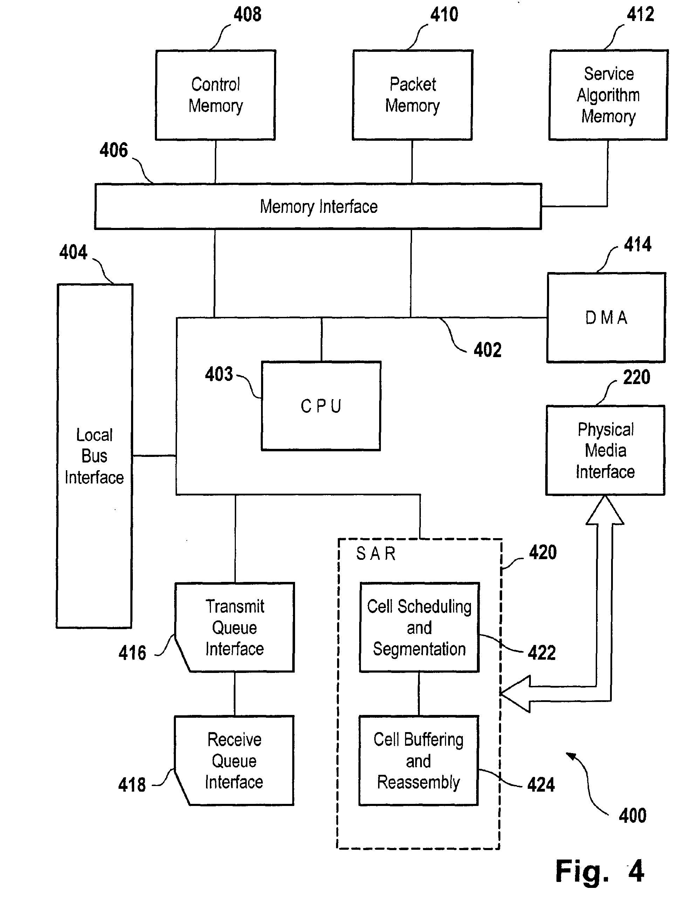

FIG. 4 depicts a block diagram for an exemplary hardware architecture 400 of a network processor provided in accordance with the teachings of the present invention as an optimized packet engine as well as a programmable processor for service creation and service logic execution. A processing unit 403 is coupled to a memory interface 406 via a processor bus 402 for interacting with control memory 408, packet memory 410 and service logic/algorithm memory 412. Control memory 408 is operable to provide storage for instructions/data used in control operations of the network processor. Packet memory 410 and service algorithm memory 412 are operable to effectuate state machine logic used in implementing a plurality of queuing and/or routing algorithms such as, e.g., per-flow-queuing, dynamically-controlled routing (DCR), trunk port allocation, et cetera, in addition to state machine logic necessary for executing one or more service logic programs (SLPs) which may be either packaged locally or updated/downloaded from a remote network node such as an SCP/SCE node. Furthermore, service data memory (not shown) may also be provided in association with the service algorithm memory 412, which data memory is operable as a local database for subscriber service data.

A local bus interface 404 is operably coupled to the processor bus 402 whereby a local bus such as a Peripheral Component Interconnect (PCI) bus may be provided for supporting additional hardware. A direct memory access (DMA) engine 414 is disposed on the processor bus 402 for accessing memory without the intervention of the processing unit 403.

A transmit queue interface 416 and a receive queue interface 418 are provided for interfacing with one or more transmit queues (not shown) and one or more receive queues (not shown), respectively. A Segmentation And Reassembly (SAR) block 420 comprising a cell scheduling and segmentation sub-block 422 and a cell-buffering frame reassembly sub-block 424 is provided for effectuating the process of segmenting relatively large data packets (e.g., frames) into smaller packets (cells) (and reassembling the smaller packets) for purposes of achieving inter-protocol compatibility. The physical media interface 220 is operably coupled with the SAR block 420 for effectuating the interface between the network processor and a plurality of network media.

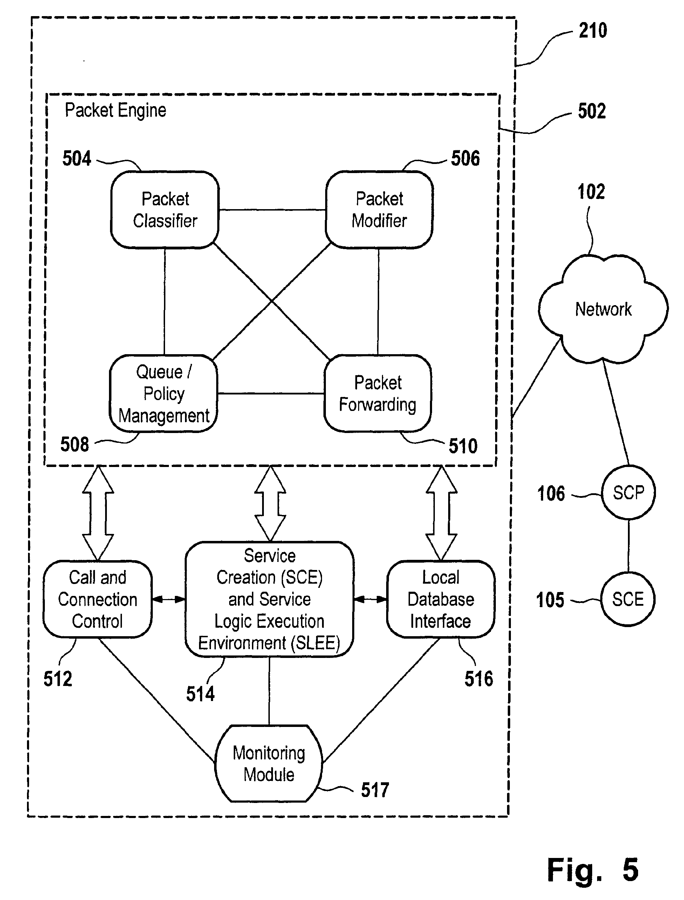

Referring now to FIG. 5, depicted therein is a functional block diagram of an exemplary programmable network processor (such as the network processor 210) optimized for call control and service creation/execution at a network access point (i.e., an edge node) in accordance with the teachings of the present invention. The network 102 to which the network access point (not explicitly referenced in FIG. 5) is coupled may preferably include a service node such as, e.g., SCP/SCE 106/105, for centralized service creation. Accordingly, it should be appreciated that a distributed service execution environment may be effectuated in the network by the use of programmable network processors (operating as "service processors") at the edges of the network.

The programmable network processor 210 includes a packet engine 502 whose functionality is encapsulated in specific functional modules set forth below:
- packet classifier 504 which identifies a packet based on known characteristics such as, e.g., address or protocol employed;
- packet modifier 506 for modifying the packet to comply with IP, ATM, or other protocols (for example, updating portions of the header fields, etc. in the protocol data units or PDUs);
- queue/policy management module 508 which defines the strategy for packet queuing, de-queuing, and scheduling of packets for specific applications including, e.g., address- and route-learning algorithms, port optimization algorithms, service programs, et cetera; and
- packet forwarding module 510 which is responsible for transmission and receipt of data over the switch fabric and forwarding/routing the packets to the appropriate addresses.

The packet engine 502 of the network processor 210 is provided to be inter-operable with a call and connection control (CACO) module 512 for executing carrier-grade, "telecom-hardened" call process models which may preferably be implemented as originating/terminating call control state machines (CCSMs) executable on the network processor's hardware/software architecture described in detail hereinabove. In a presently preferred exemplary embodiment of the present invention, the CCSMs may preferably be provided to be operable in accordance with the well known IN/AIN service architecture. Thus, the execution flow of the CCSMs is controlled by armed detection points, service triggers, and points-in-call, based on service profiles associated with the parties involved in calls received at the network access point.

In addition, the packet engine 502 is inter-operable with a carrier-grade, telecom-hardened service creation and service logic execution environment (SCE/SLEE) 514 that is responsible for packaging, deploying, downloading/updating, and executing SLPs. The call control module 512 is coupled to the SCE/SLEE module 514 such that triggering events encountered during the execution of CCSMs are operable to launch one or more SLPs for service processing. Preferably, the SLPs executed on the network processor are operable to resolve routing translation at the network access point itself for achieving wirespeed capability, rather than forwarding a query via the network to the remote SCP node 106. A local database interface 516 may be provided for local database dipping, which local database is preferably populated with subscriber data and may be upgraded periodically from the remote SCP database(s) of the network.

The programming interface effectuated by the SCE/SLEE module 514 allows coding of a plurality of SLPs for implementing a number of services for which wirespeed switching/routing at the network access point level is highly desirable. For example, 800/888/900-number services, QoS prioritization schemes (low latency, real-time voice applications over data in networks such as Voice-over-IP (VoIP), Voice-over-ATM (VoATM), Voice-over-Frame Relay (VoFR), etc.), time-of-day (TOD) routing, Domain Name Server (DNS) and Lightweight Directory Access Protocol (LDAP) services, virtual private network (VPN) tunneling, heuristic modeling based on the network's behavior, et cetera, can be effectuated by interacting with the network processor's programming interface to code appropriate SLPs via ordered sequences of programmable SIBs adapted from the carrier-grade SCE architecture.

Continuing to refer to FIG. 5, the functional block diagram of the network processor 210 preferably includes a monitoring module 517 for collecting network and access point statistics on a plurality of parameters e.g., port usage/optimization, available bandwidth, Quality of Service (QoS) enforcement, packet enqueuing/de-queuing delay, et cetera, on the basis of per packet, per session, per origination/destination, per protocol, etc. determinations. Such statistics may be uploaded on a predetermined basis (e.g., per time period) to a remote service node, e.g., SCP/SCE 106/105, for effectuating a "behavior learning algorithm" for efficient customization of service deployment. The performance statistics may also be utilized locally for heuristic modeling of the network access point's behavior based on measured traffic data. Accordingly, appropriate heuristic modeling algorithms may be provided to be executable on the hardware/software platform of the network processor 210.

In addition, as alluded to in the foregoing, the functionality of the network processor 210 may preferably include QoS prioritization for bearer traffic, e.g., voice over data, etc. Relevant performance statistics gathered by the monitoring module 517 may be provided as a feedback to such schemes. Furthermore, appropriate SLPs may be coded in association with the network processor's SCE/SLEE 514 for effectuating and/or monitoring service level agreements (SLAs) that the network operator may have.

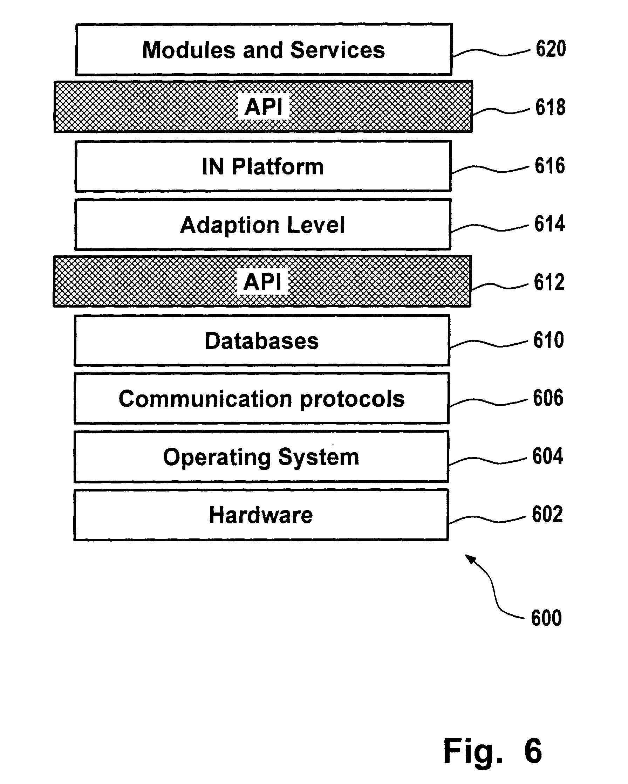

Referring now to FIG. 6, depicted therein is an exemplary functional hierarchy 600 associated with an optimized edge node of the present invention. Appropriate physical layer hardware 602 (e.g., E1/T1 interfaces), OS 604, communication protocols 606, and databases 610 are provided within the architectural platform set forth in greater detail hereinabove. An IN service platform 616, for example, comprising the functionality of various parts of SS7 such as service connection control part (SCCP), transaction capabilities application part (TCAP), IN application part (INAP), mobile application part (MAP), etc., is interfaced to the databases via appropriate APIs 612 and adaptation levels 614. As will be described below, various modules and services 620 are effectuated by packaging programmable SIBs into SLPs by means of network processor's SCE functionality which may preferably provided as a simulation/animation-based programming interface. An API 618 is provided for interfacing between the modules/services 620 and the underlying service platform.

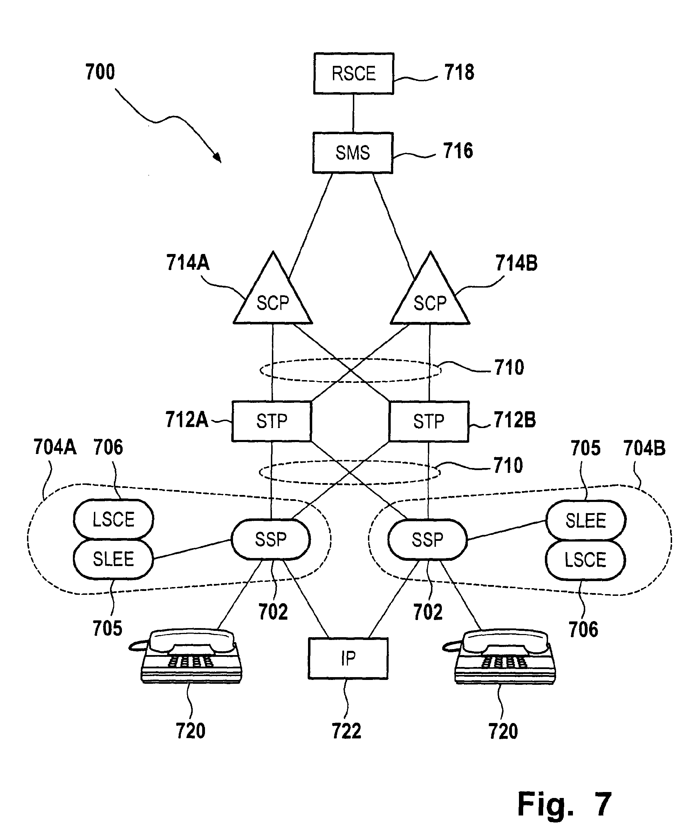

FIG. 7 depicts an exemplary AIN-compliant communications network system 700 wherein optimized edge nodes 704 are provided as SS7 entities. The AIN network system 700 includes a service management system (SMS) 716 that interfaces with a plurality of SCPs (e.g., SCP 714A and SCP 714B) via an industry standard protocol such as X.25 protocol. As is well known, SMS 716 provides network information, database management, and administrative support for the AIN network system 700. Furthermore, SMS 716 typically interfaces with SCPs for provisioning, database management, SCP application programming management, etc.

SCP 714A and SCP 714B may be directly linked to signal transfer points (STP) 712A and 712B via an SS7 link set 710. STP 712A and STP 712B are further coupled through SS7 link set 710 to one or more optimized edge nodes 704A and 704B. Each edge node is preferably comprised of a programmable network processor arrangement described hereinabove and, accordingly, includes signal switching point (SSP) functionality 702, a local SCE (LSCE) module 706, and an SLEE module 705.

The edge nodes may be provided as part of a public switched telephone network (PSTN), a public land mobile network (PLMN), or an IP-network, et cetera, and are operable to serve the subscribers using wireline and wireless devices 720 and IP-capable access devices 722.

LSCE 706 and remote SCE 718 allow the creation and testing of SLPs for service deployment in the AIN network 700. The SLPs define network services by specifying triggering events encountered in the edge nodes 704A/704B that require database access and logic for additional processing of calls received in the edge nodes.

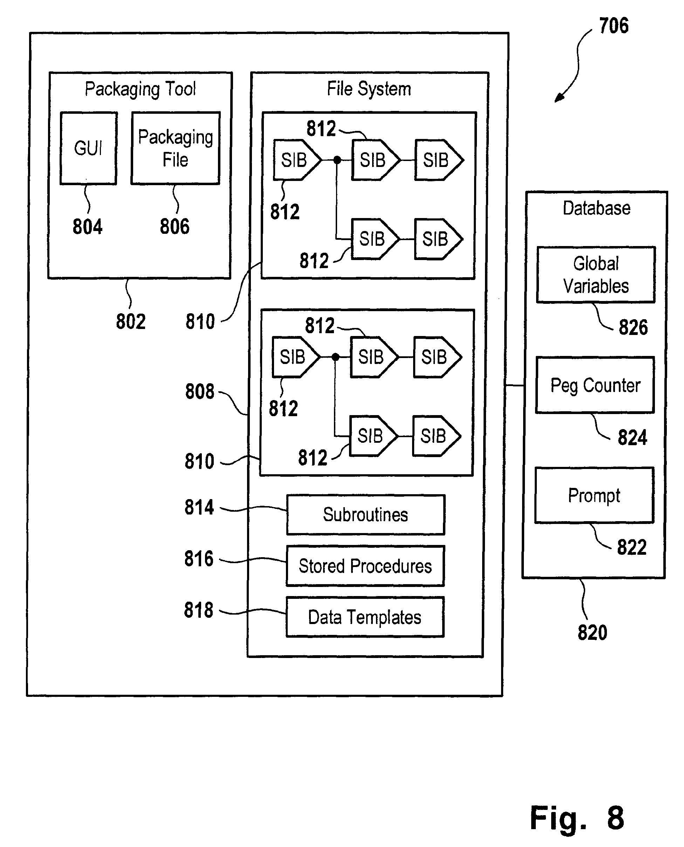

FIG. 8 depicts a functional block diagram of an exemplary LSCE (such as LSCE 706) provided for a programmable network processor of the present invention. As alluded to in the foregoing, LSCE 706 provides an abstract, high-level program environment within the context of a network processor arrangement for creating telecom/datacom services. Preferably, the programming environment is implemented using animation- and/or simulation-based toolkits built on object-oriented design concepts. A packaging tool 802 is provided as part of LSCE 706 for packaging SLPs stored in a file system 808 associated with the network processor arrangement of the edge node. Preferably, SLP packaging is effectuated by bundling an SLP with appropriate database schema and other parameters used to implement the SLP in a telecommunications network environment. In a presently preferred exemplary embodiment of the present invention, the parameters are operable to optimize functionality of the SLP in a particular environment and comprise any suitable data, instructions, or programmatic elements that vary for the SLPs coded using the toolkits of LSCE 706. For example, the parameters can include global variables 826, peg counters 824, prompts 822, etc. stored in a database 820, or subroutines 814, procedures 816, data templates 818, etc. that are provided as part of the file system 808 of the network processor software architecture.

The packaging tool 802 may be programmed in any suitable high order programming language using a user interface (preferably a graphic user interface 804). Packaging files 806 are created by the packaging tool 804 during the packaging process to bundle the SLP with its parameters and subroutines. In an exemplary embodiment, the SLPs, subroutines and parameters are stored in the packaging file 806 in a Common Object Request Broker Architecture (CORBA) format that can be used by other entities in the AIN network 700 or other components of the edge nodes. At the end of the packaging process, the packaging tool 802 is capable of saving the packaging file 806 under a name and at a location specified by the operator.

SLPs created in LSCE 706 are stored as SLPs 810 in the file system 808 wherein each SLP 810 is provided as group of interconnected SIBs 812 in a specific order to provide the exact sequence of logic execution in the SLEE associated with the edge node. In addition to the logic portion, the SIBs may preferably contain an appropriate data model to be used in connection with the logic execution as well as data access/presentation screens available at a workstation associated with the edge node.

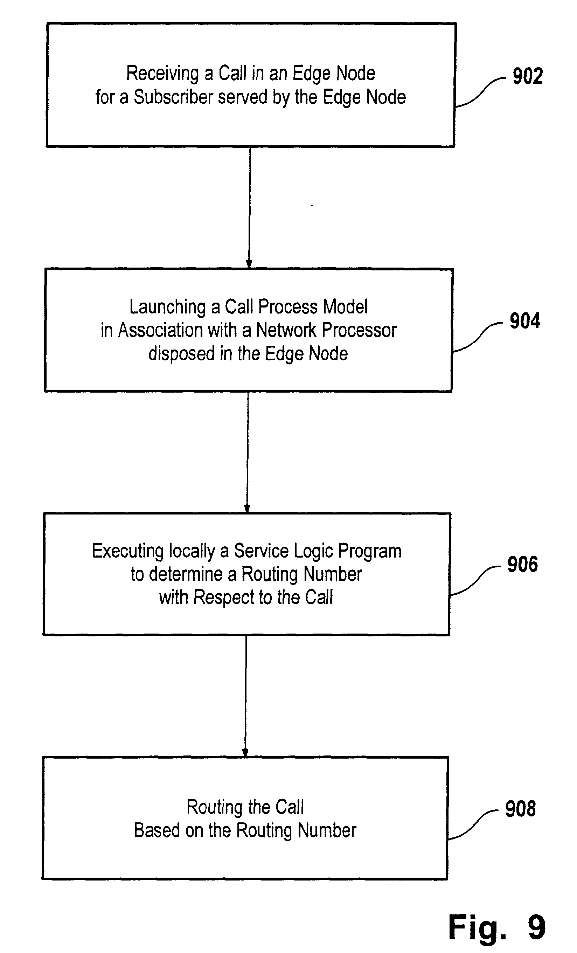

FIG. 9 is a flow chart of an exemplary call routing method provided in accordance with the teachings of the present invention. Upon receiving a call in an edge node serving a subscriber (step 902), a call process model is launched by a call/connection control module in association with the programmable network processor disposed in the edge node (step 904). Depending upon a triggering event or events encountered during the execution of the CCSM associated with the call, an appropriate SLP or SLPs are executed on the network processor to determine a routing number or destination number with respect to the call received in the edge node (step 906). As provided hereinabove, the SLP execution may preferably take place as a state-machine-based service algorithm in the memory associated with the network processor arrangement. Upon determining the routing number, the call is appropriately routed at wirespeed in the network based on the routing number (step 908).

Based on the foregoing, those skilled in the art should appreciate that programmable network processors having the carrier-grade telecom SCE/SLEE/SCP capability in accordance with the teachings of the present invention provide several advantages. By adding the SCE capability set for advanced programming and feature-related service engineering into the network processor architecture, calls having different levels of priority (e.g., multi-media calls over data) may be sent over the same ports without affecting QoS requirements. Also, wirespeed network processing and per-packet algorithmic parsing can facilitate per-packet billing technologies and amalgamation technologies for more cost-efficient service provisioning. As those skilled in the art should recognize, while per-packet billing has not been viable in the current art because of speed degradations (due to the time to "look" at the packet) and volume issues (information collection and amalgamation), providing SCE-like programmability interfacing in network processors in accordance with the teachings of the present invention advantageously overcomes these shortcomings. The SCE's capability to quickly modify and test service logic at the workbench, combined with the ability to download into the network processor, provides wirespeed switching functionality that ameliorates the difficulties associated with the current per-packet technologies.

Further, with the ability of a centralized SCE to quickly modify and distribute logic, upgrading existing network processor technologies may be performed without having to do board-level replacements at each individual access point, which can be very expensive as well as almost impractical due to the vast number of such devices placed at the edge of the network. Taking advantage of software-developed algorithms and network file transfer upgrades, the edge devices may be upgraded with new QoS-based billing and amalgamation solutions.

Additionally, as pointed out above, an edge router placed in a VoIP network is able to prioritize voice calls on the appropriate queues over data sessions using the SCE programmability capability set. Moreover, because the edge router is capable of resolving routing number translations (e.g., 800/900-number translation), optimized routing may be effectuated at the edge of the network itself instead of being routed to a centralized point to decide how to route the call. For example, high-volume and relatively unchanged 800/900 numbers (i.e., numbers that are not changed often) as well as most-frequented Domain Name addresses can be loaded into the network processor memory as a local database cache for wirespeed resolution, while keeping pace with network changes by means of periodic updates (i.e., daily, weekly, etc.).

As another example, new VPN tunneling technologies may be applied on the basis of per customer, per time of day, etc. by employing the SCE-capable network processors of the present invention. The network processors can be programmed to discern between different VPN technologies per different customer groups, different security/encryption schemes, etc., based on appropriate SLPs locally created or updated from a centralized SCE.

It is believed that the operation and construction of the present invention will be apparent from the foregoing Detailed Description. While the system and method shown and described have been characterized as being preferred, it should be readily understood that various changes, modifications and enhancements could be made therein without departing from the scope of the present invention as set forth in the following claims. For example, because of the integration of voice networks and IP-based data networks, the teachings of the present invention may be also be practiced advantageously in hybrid networks wherein a plethora of IP-capable edge devices are provided for interfacing with diverse personal communication devices such as H.323-compatible terminals, Session Initiation Protocol (SIP)-based phones, PDAs, etc. While the applicability of network processors in broadband network routers has been particularly exemplified, the teachings of the present invention may be advantageously practiced with network processors deployed in DNS servers, LDAP servers, Web cache servers, policy servers, among others. Accordingly, those skilled in the art should readily appreciate that these and other variations, additions, modifications, enhancements, et cetera, are deemed to be within the ambit of the present invention whose scope is determined solely by the following claims.

## Claims

1. A network element disposed in a telecommunications network and operable to serve a subscriber, comprising:
a network processor having a programmable interface for dynamically configuring a routing operation in response to a request received from said subscriber; and
a service logic program (SLP) executable on said network processor for interacting with said routing operation to effectuate wirespeed service switching, wherein said SLP is triggered based on a service trigger associated with said subscriber.

2. The network element disposed in a telecommunications network as set forth in claim 1, further comprising a local database that is updatable from a remote service database associated with a service control point (SCP) disposed in said telecommunications network.

3. The network element disposed in a telecommunications network as set forth in claim 2, wherein said SLP is programmable from a service creation environment (SCE) associated with said SCP.

4. The network element disposed in a telecommunications network as set forth in claim 2, wherein said SLP is programmable from a service creation environment (SCE) co-located at said network element.

5. The network element disposed in a telecommunications network as set forth in claim 4, wherein said SCE comprises a graphic user interface (GUI) operable with a packaging tool for packaging said SLP based on a plurality of service independent blocks (SIBs).

6. The network element disposed in a telecommunications network as set forth in claim 5, wherein said SIBs comprise programmable SIBs.

7. The network element disposed in a telecommunications network as set forth in claim 5, wherein said SCE is operable to code a particular SLP for monitoring service level agreements (SLAs) associated with said network element.

8. The network element disposed in a telecommunications network as set forth in claim 5, wherein said SCE is operable to code a particular SLP for effectuating virtual private network (VPN) tunneling in said telecommunications network.

9. The network element disposed in a telecommunications network as set forth in claim 5, wherein said SCE is operable to code a particular SLP for effectuating an 800-number service in said telecommunications network.

10. The network element disposed in a telecommunications network as set forth in claim 5, wherein said SCE is operable to code a particular SLP for effectuating a 900-number service in said telecommunications network.

11. The network element disposed in a telecommunications network as set forth in claim 5, wherein said SCE is operable to code a particular SLP for effectuating time-of-day (TOD)-based routing in said telecommunications network.

12. The network element disposed in a telecommunications network as set forth in claim 5, wherein said SCE is operable to code a particular SLP for effectuating a Domain Name Server (DNS) operation in said telecommunications network.

13. The network element disposed in a telecommunications network as set forth in claim 5, wherein said SCE is operable to code a particular SLP for effectuating a Lightweight Directory Access Protocol (LDAP) server operation in said telecommunications network.

14. The network element disposed in a telecommunications network as set forth in claim 5, wherein said SCE is operable to code a Quality of Service (QoS) prioritization scheme in said telecommunications network.

15. The network element disposed in a telecommunications network as set forth in claim 5, wherein said SCE is operable to code a heuristic modeling scheme based on network traffic data measured in said telecommunications network, said heuristic modeling scheme for modifying said network element's behavior depending upon said measured network traffic data.

16. A network processor operable for use in an edge-optimized node disposed in a telecommunications network, comprising:
a packet engine for operating on incoming packets and to determine appropriate routing in said telecommunications network for said incoming packets;
a service logic execution (SLE) module coupled to said packet engine for interacting with said routing with respect to a call associated with a subscriber,
wherein said subscriber is served by said edge-optimized node;
a call control module coupled to said packet engine and said SLE module, said call control module operating to launch said SLE module when a triggering event is encountered in a call process model associated with said call; and
a programming interface for creating service logic programs (SLPs) executable in association with SLE and call control modules.

17. The network processor operable for use in an edge-optimized node disposed in a telecommunications network as set forth in claim 16, further comprising an interface for interfacing with a local database populated with said subscriber's service profile data.

18. The network processor operable for use in an edge-optimized node disposed in a telecommunications network as set forth in claim 17, wherein said local database is provided as a local memory that is updatable by a service control point (SCP) disposed in said telecommunications network.

19. The network processor operable for use in an edge-optimized node disposed in a telecommunications network as set forth in claim 18, wherein said programming interface is operable with a centralized remote service creation environment (SCE) node associated with said SCP disposed in said telecommunications network.

20. The network processor operable for use in an edge-optimized node disposed in a telecommunications network as set forth in claim 19, wherein said programming interface is operable as a local service creation environment (SCE) interface with an object-oriented simulation-based toolkit for creating said SLPs.

21. The network processor operable for use in an edge-optimized node disposed in a telecommunications network as set forth in claim 20, wherein said local SCE interface comprises a user interface operable with a packaging tool for packaging a particular SLP as an ordered sequence of a plurality of service independent blocks (SIBs).

22. The network processor operable for use in an edge-optimized node disposed in a telecommunications network as set forth in claim 21, wherein said SIBs comprise programmable SIBs.

23. The network processor operable for use in an edge-optimized node disposed in a telecommunications network as set forth in claim 22, wherein said SLP is operable for monitoring service level agreements (SLAs) associated with said edge-optimized node.

24. The network processor operable for use in an edge-optimized node disposed in a telecommunications network as set forth in claim 22, wherein said SLP is operable for effectuating virtual private network (VPN) tunneling in said telecommunications network .

25. The network processor operable for use in an edge-optimized node disposed in a telecommunications network as set forth in claim 22, wherein said SLP is operable for effectuating an 800-number service in said telecommunications network.

26. The network processor operable for use in an edge-optimized node disposed in a telecommunications network as set forth in claim 22, wherein said SLP is operable for effectuating a 900-number service in said telecommunications network.

27. The network processor operable for use in an edge-optimized node disposed in a telecommunications network as set forth in claim 22, wherein said SLP is operable for effectuating time-of-day (TOD)-based routing in said telecommunications network.

28. The network processor operable for use in an edge-optimized node disposed in a telecommunications network as set forth in claim 22, wherein said SLP is operable for effectuating a Domain Name Server (DNS) operation in said telecommunications network.

29. The network processor operable for use in an edge-optimized node disposed in a telecommunications network as set forth in claim 22, wherein said SLP is operable for effectuating a Lightweight Directory Access Protocol (LDAP) server operation in said telecommunications network.

30. The network processor operable for use in an edge-optimized node disposed in a telecommunications network as set forth in claim 22, wherein said SLP is operable for effectuating a Quality of Service (QoS) prioritization scheme in said telecommunications network.

31. The network processor operable for use in an edge-optimized node disposed in a telecommunications network as set forth in claim 22, wherein said local SCE interface is operable for effectuating a heuristic modeling scheme based on network traffic data measured in said telecommunications network, said heuristic modeling scheme for modifying said network element's behavior depending upon said measured network traffic data.

32. A method of call routing in a telecommunications network having an edge node with a programmable network processor, comprising the steps of:
receiving a call in said edge node for a subscriber served by said edge node;
responsive to said call, launching a call process model in association with said programmable network processor;
executing a service logic program (SLP) on said programmable network processor, said SLP being invoked responsive to said call process model;
determining a routing number based on said step of executing said SLP; and
routing said call in said telecommunications network based on said routing number.

33. The method of call routing in a telecommunications network as set forth in claim 32, wherein said SLP is generated in association with a service creation environment (SCE) provided for said programmable network processor.

34. The method of call routing in a telecommunications network as set forth in claim 33, wherein said SLP is executed in association with a service logic execution environment (SLEE) provided for said programmable network processor.

35. The method of call routing in a telecommunications network as set forth in claim 34, wherein said programmable network processor is operable to download services available at a service control point (SCP) disposed in said telecommunications network.

36. The method of call routing in a telecommunications network as set forth in claim 34, wherein said programmable network processor is operable to update its SLPs based on a centralized SCE disposed in said telecommunications network.

37. The method of call routing in a telecommunications network as set forth in claim 34, wherein said call relates to an 800-number service.

38. The method of call routing in a telecommunications network as set forth in claim 34, wherein said call relates to a 900-number service.

39. The method of call routing in a telecommunications network as set forth in claim 34, wherein said call relates to an 888-number service.

40. The method of call routing in a telecommunications network as set forth in claim 34, wherein said call relates to a Domain Name Server (DNS) operation.

41. The method of call routing in a telecommunications network as set forth in claim 34, wherein said call relates to a Lightweight Directory Access Protocol (LDAP) operation.
